# EUROPÄISCHE PATENTSCHRIFT

(11) **EP 1 105 749 B1**
(45) Veröffentlichungstag und Bekanntmachung des Hinweises auf die Patenterteilung: **02.05.2002**
(21) Anmeldenummer: 99936612.3
(22) Anmeldetag: 21.07.1999
(51) Int. Cl.: G01S 15/93, G01S 15/87, G01S 7/521

(54) **VERFAHREN UND VORRICHTUNG ZUR ERFASSUNG VON OBJEKTEN, INSBESONDERE ALS EINPARKHILFE-ASSISTENZ-VORRICHTUNG IN EINEM KRAFTFAHRZEUG**
METHOD AND DEVICE FOR DETECTING OBJECTS, ESPECIALLY USED AS A PARKING ASSISTANCE DEVICE IN A MOTOR VEHICLE
PROCEDE ET DISPOSITIF DE DETECTION D'OBJETS, EN PARTICULIER DISPOSITIF D'ASSISTANCE AU PARCAGE, A BORD D'UN VEHICULE

(30) Priorität: 06.08.1998 DE 19835600; 19.01.1999 DE 19901847
(43) Veröffentlichungstag der Anmeldung: 13.06.2001
(73) Patentinhaber: Volkswagen Aktiengesellschaft, 38436 Wolfsburg (DE)
(72) Erfinder: BAHR, Ulrich, D-38110 Braunschweig (DE); LISSEL, Ernst, D-38442 Wolfsburg (DE); SCHOFT, Axel, D-38106 Braunschweig (DE); BÜTTGENBACH, Stephanus, D-38173 Sickte (DE)
(86) Internationale Anmeldenummer: EP9905378
(87) Internationale Veröffentlichungsnummer: WO0008484

(56) Entgegenhaltungen:
- EP-A- 0 825 585
- DE-A- 3 806 847
- US-A- 3 953 131
- US-A- 5 317 320

## Beschreibung

Die Erfindung betrifft ein Verfahren und eine Vorrichtung zur Erfassung von Objekten, insbesondere als Einparkhilfe-Assistenz-Vorrichtung in einem Kraftfahrzeug, umfassend eine Anzahl von Abstands-Sensoren, mindestens einen die Abstands-Sensoren ansteuernden Mikrocontroller und eine Ausgabeeinheit.

Zur Erfassung von Objekten, insbesondere zur Abstandsmessung, sind verschiedenste Vorrichtungen bekannt, die beispielsweise auf der Basis von Radar, Lasern oder Ultraschall arbeiten. Insbesondere im Nahbereich kommen Ultraschall-Sensoren wegen ihrer sehr hohen Auflösung zum Tragen.

Eine derartige Vorrichtung ist beispielsweise aus der DE 44 25 419 C1 bekannt, mit einer heckseitigen Sender- und Empfängeranordnung, einer frontseitigen Sender- und Empfängeranordnung, die wenigstens eine Sender- und Empfängereinheit im mittleren Frontbereich und jeweils eine Sender- und Empfängereinheit in den Fronteckbereichen umfaßt, einem Steuergerät zur Aktivierung und Deaktivierung der Sender- und Empfängeranordnung und akustischen und/oder optischen Wamelementen, die bei aktivierten Sender- und Empfängeranordnungen von deren Ausgangssignalen abhängige Warnsignale erzeugen, wobei die frontseitige als auch die heckseitige Sender- und Empfängeranordnung aktiviert ist, solange der Rückwärtsgang aktiv ist und die Fahrzeuggeschwindigkeit einen ersten Schwellwert nicht überschreitet. Andererseits wird nur die frontseitige Sender- und Empfängeranordnung aktiviert, solange der Rückwärtsgang nicht aktiv ist und die Fahrgeschwindigkeit einen vorgegebenen zweiten Schwellwert nicht überschreitet. In allen anderen Fahrzuständen sind beide Sender- und Empfängeranordnungen deaktiviert.

Die Abstandsmessung mit Hilfe von Ultraschall-Wandlern als Einparkhilfe oder zur Detektion seitlicher Hindernisse bei Kraftfahrzeugen beruht auf der Messung der Laufzeit des Schalls. Dazu sendet ein am Kraftfahrzeug angebrachter Wandler ein Signal aus, welches an einem Hindernis reflektiert wird. Dieses Echo kann von weiteren am Kraftfahrzeug montierten Wandlern empfangen werden. Als Sendesignal dienen entweder kurze Wellenzüge oder ein kontinuierlicher Wellenzug, der mit einer festgelegten oder zufälligen Kennung versehen wird. Die Laufzeit des kurzen Wellenzuges ergibt sich direkt aus dem Zeitpunkt seines Eintreffens beim Empfänger. Beim kontinuierlichen Wellenzug erfolgt die Laufzeitmessung durch Korrelation des ausgesendeten und des empfangenen Signals.

Beim Einsatz solcher Systeme besteht die Problematik, daß sich zwei Fahrzeuge gegenseitig stören können. Dabei kann es zu Fehlerkennungen von Hindernissen kommen, wenn das Sendesignal des einen Kraftfahrzeuges von dem anderen als Echo des eigenen Sendesignals fehlinterpretiert wird. Dadurch wird unter Umständen ein Hindernis detektiert, welches nicht vorhanden ist oder schlimmer, ein Hindernis wird nicht erkannt, weil die schwachen Echos von einem starken Störsignal eines anderen Kraftfahrzeuges überdeckt werden. Der letzte Fall tritt insbesondere dann auf, wenn das Empfangssignal in der Amplitude geregelt wird und die Ausregelzeit in der Größenordnung eines Meßzyklus liegt. Ein starkes Störsignal sorgt dann für eine geringe Verstärkung der Amplitudenregeleinrichtung AGC, so daß ein schwaches Echo für eine sichere Erkennung nicht ausreichend verstärkt wird.

Ein weiteres Problem entsteht, wenn zwei oder mehr Wandler an einem Fahrzeug gleichzeitig senden, um beispielsweise die Meßrate zu erhöhen. Auch wenn die Sendewandler räumlich so getrennt sind, daß im Normalfall ihre Sendeechos nur an unterschiedlichen Empfängergruppen eintreffen sollten, kann nicht ausgeschlossen werden, daß bei ungünstiger Anordnung von Hindernissen bzw. Ausrichtung ihrer Oberflächen Signalechos an eine nicht vorgesehene Empfängergruppe gelangen. Auch dies kann zu Fehlererkennungen von Hindernissen führen. Lösungsmöglichkeiten sind, diese gegenseitigen Störungen zu erkennen (Signalkollisionserkennung) oder gegenseitige Störungen zu vermeiden (Signalkollisionsvermeidung). Die Signalkollisionsvermeidung besitzt den Vorteil, daß die Hindemisdetektion nicht durch einen anderen Sender unterbrochen wird.

Der Erfindung liegt daher das technische Problem zugrunde, ein Verfahren und eine Vorrichtung zur Erfassung von Objekten zu schaffen, bei denen die Einflüsse anderer Quellen auf die Meßgenauigkeit vermieden werden.

Die Lösung des technischen Problems ergibt sich durch die Merkmale der Patentansprüche 1 und 6. Durch die Beaufschlagung der Abstandssensoren mit einer zeitlich veränderlichen Kennung ist es möglich, zuverlässig die empfangenen Signale eindeutig den Quellen zuzuordnen, wenn eine mögliche Störquelle ihre Kennung nicht exakt zeitlich genauso ändert. Weitere vorteilhafte Ausgestaltungen der Erfindung ergeben sich aus den Unteransprüchen.

Durch die Steuerung der zeitlichen Änderung der Kennung mittels einer Zufallsfunktion wird das Zusammentreffen zweier Quellen mit gleicher zeitlicher Änderung der Kennung auf ein Minimum reduziert.

Zur Vermeidung des Problems der Überlagerung von den Sensoren am gleichen Kraftfahrzeug können diese ebenfalls mit einer unterschiedlichen Kennung beaufschlagt werden, wobei entweder jeder Sensor eine sensorspezifische Kennung erhält oder aber die Sensoren gruppenweise zusammengefaßt werden. Des weiteren ist es möglich, die Sensoren gruppenweise auf verschiedenen Trägerfrequenzen arbeiten zu lassen.

Insbesondere bei Verwendung der Vorrichtung als Einparkhilfe-Assistenz-Vorrichtung sind die Abstands-Sensoren vorzugsweise als Ultraschall-Wandler, speziell als Folien-Ultraschall-Wandler ausgebildet, da diese in einem weiteren Frequenzbereich betrieben werden können und eine gute Auflösung aufweisen.

Die Erfindung wird nachfolgend anhand eines bevorzugten Ausführungsbeispieles näher erläutert. Die Fig. zeigen:

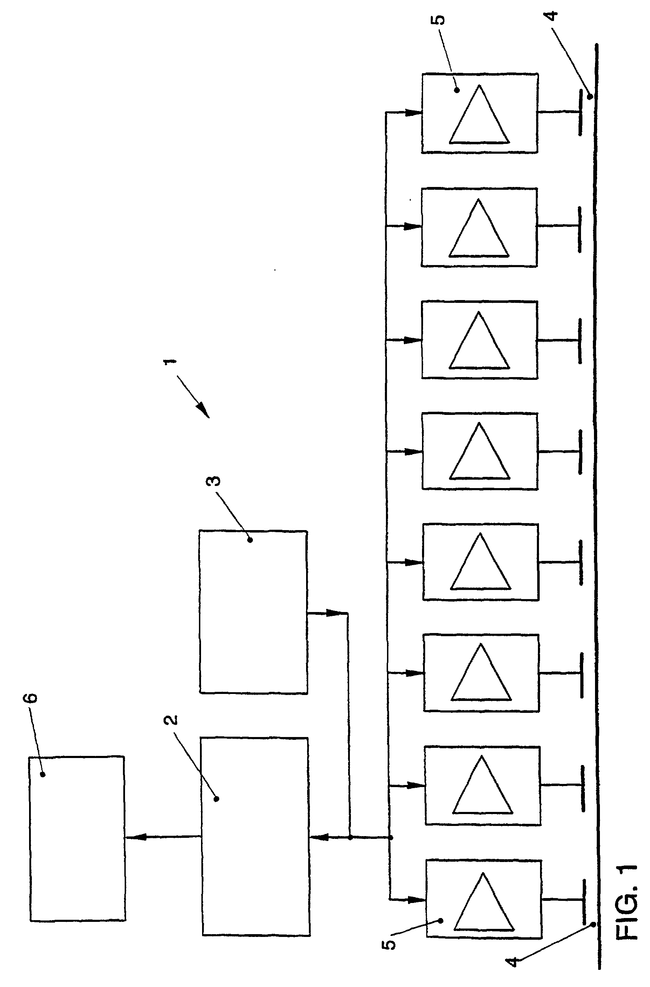

- Fig. 1: ein schematisches Blockschaltbild der Vorrichtung zur Erfassung von Objekten mit Ultraschall-Wandlern,
- Fig. 2: eine Schaltungsanordnung der Sende-Empfangsschaltung,
- Fig. 3: einen Querschnitt durch einen Folien-Sandwich-Ultraschall-Wandler,
- Fig. 4a: die Amplitudencharakteristik für einen 12 µm Folien-Ultraschall-Wandler
- Fig. 4b: die Amplitudencharakteristik für einen 24 µm Folien-Ultraschall-Wandler
- Fig. 5a - g: verschiedene Modulationsarten für die Sendesignale,
- Fig. 6: eine schematische Darstellung der Empfangssituation und
- Fig. 7: eine schematische Darstellung der Ermittlung des Abstandes eines Objektes

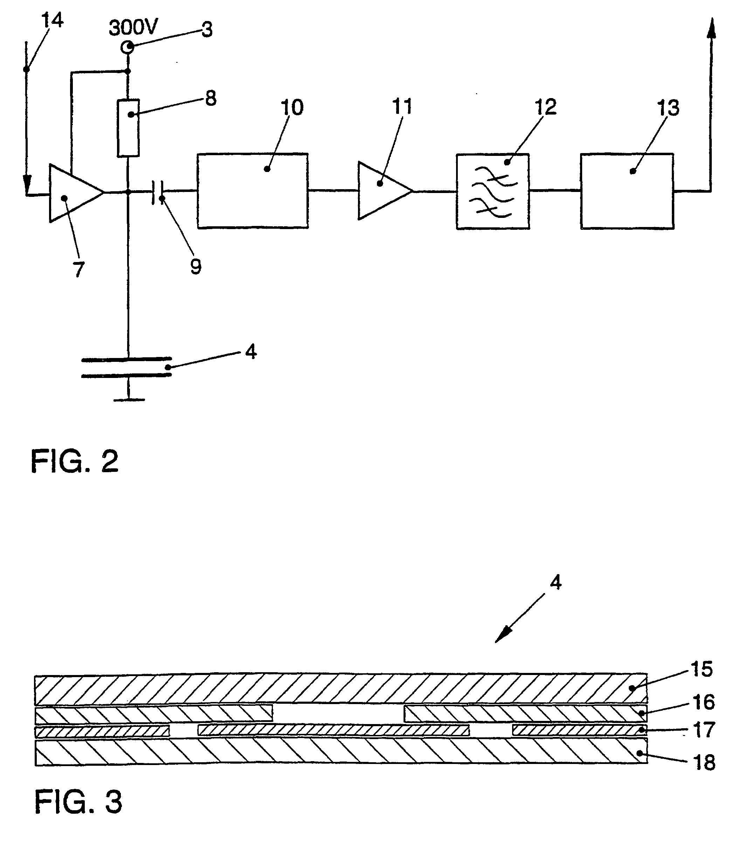

Die Vorrichtung 1 zur Erfassung von Objekten umfaßt einen Mikrocontroller 2, eine Spannungsversorgung 3, eine Vielzahl von Ultraschall-Wandlern 4, eine den jeweiligen Ultraschall-Wandlern 4 zugeordnete Sende-Empfangs-Schaltung 5 und eine optische und/oder akustische Wameinrichtung 6. Der Mikrocontroller 2 hat dabei verschiedene Funktionen. Zum einen prägt dieser den Sendesignalen der Ultraschall-Wandler 4 eine zeitlich veränderliche Kennung auf und zum anderen wertet dieser die empfangenen Signale der Ultraschall-Wandler 4 nach der Laufzeit aus und ermittelt daraus die Abstände von Objekten. Die Aufprägung der Kennung und die Auswertung werden später noch detailliert beschrieben. Des weiteren steuert der Mikrocontroller 2 die optische und/oder akustische Warneinrichtung 6 an. Diese kann beispielsweise als Display ausgebildet sein, auf dem der aktuelle Abstand zu den Objekten alphanumerisch angezeigt wird. Akustisch kann der Abstand mittels einer Sprachausgebeeinheit oder mittels Signaltönen verschiedener Frequenz und/oder Lautstärke ausgegeben werden. Die Ablaufsteuerung wird nun nachfolgend exemplarisch für eine Sende-Empfangs-Schaltung 5 und einen Ultraschall-Wandler 4 anhand der Fig. 2 erläutert.

Die Sende-Empfangs-Schaltung 5 umfaßt einen Sendeverstärker 7, einen Vorwiderstand 8, einen Entkopplungskondensator 9, einen Amplitudenbegrenzer 10, einen Verstärker 11, einen Demodulator 12 und eine Signalerkennungseinheit 13. Wird nun die Vorrichtung 1 aktiviert, so prägt der Mikrocontroller 2 dem Ultraschall-Wandler 4 ein Sendesignal mit einer zeitlich veränderlichen Kennung auf, wozu der Mikrocontroller 2 ein entsprechendes elektrisches Signal 14 erzeugt und dem Sendeverstärker 7 zuführt. Je nach Art des zu verwendenden elektrischen Signals 14 erzeugt der Mikrocontroller 2 das Signal 14 direkt oder aber mittels eines Funktionsgenerators bzw. eines modulierbaren Oszillators. Dieses elektronische Signal 14 wird durch den Sendeverstärker 7 verstärkt und regt den Ultraschall-Wandler 4 aufgrund des wechselnden elektrischen Feldes zum Abstrahlen von Ultraschallwelien gemäß den Frequenzspektren des elektrischen Signals 14 an. Die Spannungsversorgung 3 liefert dabei die Betriebsspannung sowohl für den Sendeverstärker 7 als auch für den Ultraschall-Wandler 4. Der Widerstand 8 sorgt für eine Vorspannung am Wandler 4 und ist so groß, daß im Empfangsbetrieb die elektrische Ladung am Wandler 4 nahezu konstant bleibt, wodurch beim Empfang einer Ultraschallwelle am Wandler 4, durch die Änderung seiner Kapazität, ein elektrisches Signal entsteht, das dem Eingang des Amplitudenbegrenzers 10 zugeführt wird, wobei der Entkopplungskondensator 9 eine Gleichspannungsentkopplung zum Eingangsverstärker 7 bzw. dem Ultraschall-Wandler 4 bewirkt. Das amplitudenbegrenzte Wechselspannungssignal am Ausgang des Amplitudenbegrenzers 10 wird durch den Verstärker 11 verstärkt und im Demodulator 12 demoduliert, d.h. die Kennung des empfangenen Signals wird separiert. Da die zeitliche Änderung der Kennung des Sendesignals bekannt ist, kann mittels eines Vergleichs überprüft werden, ob das empfangene Signal ein Echo des Sendesignals ist oder von einer anderen Ultraschallquelle stammt.

In der Fig. 3 ist ein Folien-Sandwich-Ultraschallwandler 4 im Querschnitt dargestellt. Der Folien-Sandwich-Ultraschall-Wandler 4 umfaßt eine leitfähige und vorzugsweise eingefärbte Deckfolie 15, eine strukturierte Distanzhalterfolie 16, eine Wandlerelektrode 17 und einen Kunststoff-Stoßfänger 18 bzw. seitlichen Rammschutz. Ein derartiger Folien-Sandwich-Ultraschall-Wandler 4 ist somit optisch optimal an die Karosserie eines Kraftfahrzeuges angepaßt und visuell kaum wahrnehmbar. Die Wandlerlektrode 16 ist dabei beispielsweise als Leitlack ausgebildet. Anstelle der strukturierten Distanzhalterfolie 16 kann der Abstand auch mittels einer im Siebdruck hergestellten Struktur realisiert werden.

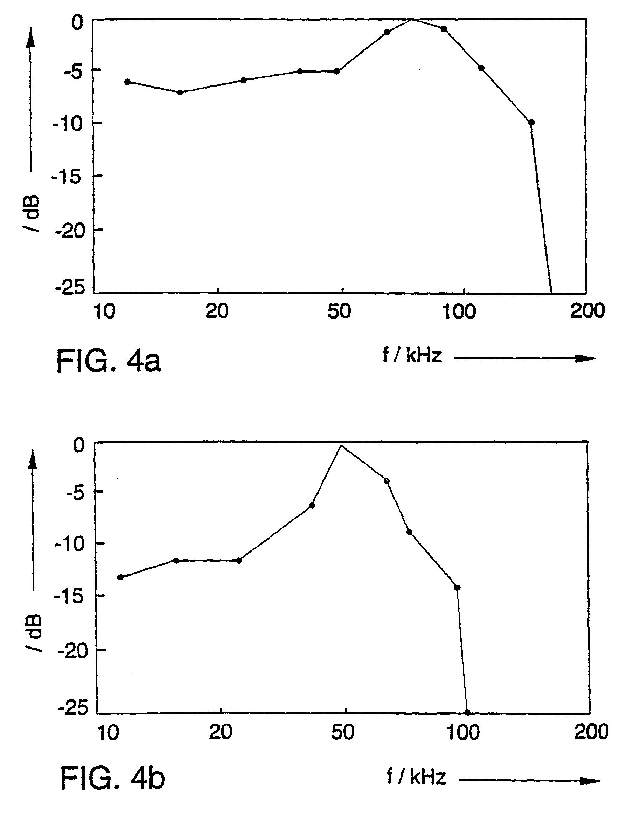

Der Vorteil von Folien-Ultraschall-Wandlem 4 gegenüber anderen Wandlern ist der große Frequenzbereich, in dem diese arbeiten können. In der Fig. 4a ist beispielsweise die Empfangsamplitude eines Echosignals über der Frequenz für einen Folien-Ultraschall-Wandler 4 mit einer 12 um Folie bei einem Objekt-Abstand von 1,40 m bei glatter Oberfläche dargestellt, wobei die Empfangsamplitude bei der Resonanzfrequenz auf 0 dB normiert wurde. Wie aus der Darstellung entnehmbar ist, ist die Empfangsarnplitude über einen weiten Frequenzbereich weniger als 10 dB im Verhältnis zur Resonanz gedämpft. In der Fig. 4b ist die Empfangsamplitude für einen Folie-Ultraschall-Wandler 4 mit einer 24 µm Folie bei gleichen Meßbedingungen dargestellt.

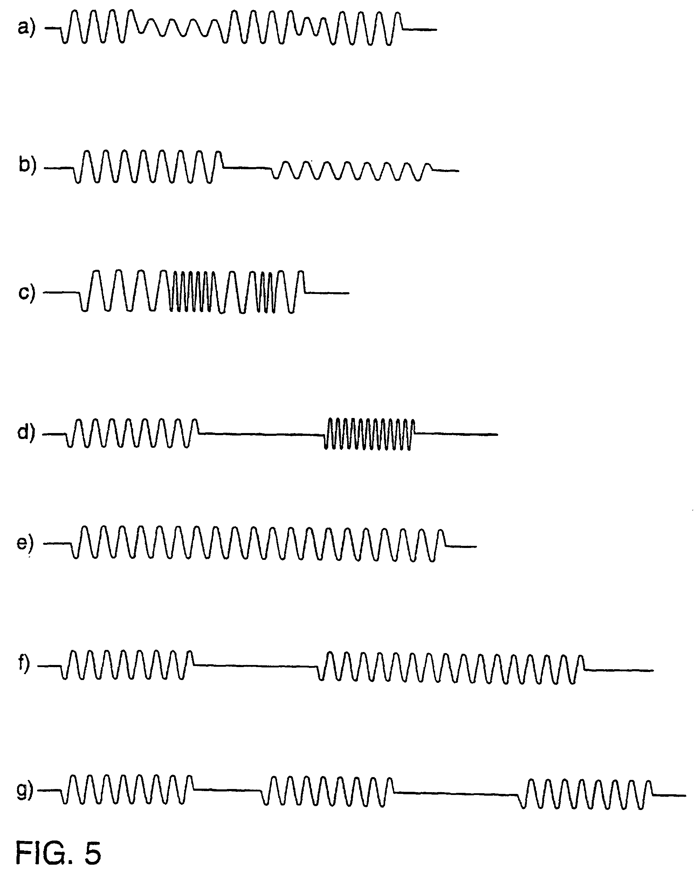

Zur Aufprägung der verschiedenen, zeitlich veränderlichen Kennung wird das elektrische Signal 14 vorzugsweise moduliert, wobei prinzipiell alle aus der Nachrichtentechnik bekannten Modulationsarten in Frage kommen. Das zu modulierende Trägersignal, also die Grundfrequenz, auf der der Ultraschall-Wandler 4 sendet, besteht aus Wellenzügen, wobei je nach gewählter Modulationsart die Modulation innerhalb eines Wellenzuges oder über mehrere Wellenzüge erfolgen kann. In der Fig. 5a ist eine Amplitudenmodulation innerhalb eines Wellenzuges und in der Fig. 5b eine Amplitudenmodulation über mehrere Wellenzüge dargestellt.

Da die Amplitude des Echosignals allerdings auch sehr stark von der Entfernung und den Reflexionsverhältnissen abhängt, müssen die Empfangsamplituden immer relativ zueinander ausgewertet werden. Weiterhin ist es erforderlich, das Empfangssignal mit einem Amplitudenregelverstärker (AGC) zu verstärken, um zu vermeiden, daß das Signal bis in die Begrenzung verstärkt wird und damit die Amplitudenformation verloren geht. Zur Vergrößerung des Signal-Rausch-Abstandes ist es außerdem erforderlich, die Frequenzbandbreite zu begrenzen.

Auch die Frequenzmodulation ist sowohl innerhalb eines Wellenzuges (Fig. 5c) als auch über mehrere Wellenzüge (Fig. 5d) möglich. Das Empfangssignal kann bis in die Begrenzung verstärkt werden, da die Information in der Signalfrequenz liegt. Die Demodulation erfolgt durch Bandpaßfilter hoher Güte bzw. allgemein durch eine Frequenzanalyse. Es ist zu beachten, daß durch Relativbewegungen der Hindernisse Frequenzverschiebungen auftreten (Doppler-Effekt). Der Frequenzhub der Modulation muß für einen sicheren Betrieb größer sein als solch eine Frequenzverschiebung.

Die Phasenmodulation ist nur innerhalb eines Wellenzuges (Fig. 5e) praktikabel, da die Grundphasenlage des Eingangssignals mit der Distanz zum Hindernis variiert und daher nur eine relative Phasenlage bzw. Änderung der Phase ausgewertet werden kann. Bei der Pulslängenmodulation (Fig. 5f) und der Pulspausenmodulation (Fig. 5g) werden die Länge bzw. der Abstand mehrerer Wellenzüge verändert. Es ist zu beachten, daß die Länge und insbesondere der Abstand der Wellenzüge durch eine Relativbewegung des Hindemisses verändert werden. Die genannten Modulationsarten können zum Teil auch kombiniert werden.

Um zu erkennen, daß sich zwei Systeme stören, ist es notwendig, die augesendeten Signale mit unterschiedlichen Kennungen zu versehen, was mit den oben genannten Modulationsarten geschehen kann. Diese Kennungen werden vorzugsweise zufällig gewählt und variiert, um auszuschließen, daß zwei Systeme die gleiche Kennung besitzen. Wird nun ein Störsignal von einem anderen Kraftfahrzeug empfangen, so kann anhand der unbekannten Kennung die Messung als ungültig erklärt werden. Bei der Überlagerung zweier Signale am Empfänger wird die Kennung zerstört, was ebenfalls erkannt wird. Während einer solchen Störung ist keine gültige Messung möglich. Daher sollte auch die Aussendung von Signalen für eine gewisse Zeit unterbrochen werden, um dem anderen System die Möglichkeit zu geben, gültige Messungen durchzuführen. Damit zwei Systeme nicht die gleiche Zeit ihre Messungen aussetzen und sich dann wieder stören, sollte die Wartezeit ebenfalls zufallsgesteuert sein.

Bei der Verwendung unterschiedlicher Sendefrequenzen, die bei ausreichendem Frequenzabstand von den Empfängern selektiv verarbeitet werden können, ist es möglich, mit zwei Systemen gleichzeitig zu arbeiten, ohne daß diese sich gegenseitig stören können. Damit ist es auch möglich, mit mehreren Wandlem an einem Kraftfahrzeug gleichzeitig zu senden, um z.B. die Meßrate zu erhöhen. Wegen der sehr begrenzeten Anzahl von Sendefrequenzen muß eine Strategie angewendet werden, bei der z.B. jeder Seite (vorn, hinten, links, rechts) des Fahrzeuges eine oder mehrere festgelegte Sendefrequenzen zugeordnet werden. Da zwei Fahrzeuge, die z.B. gleichzeitig einparken, meist auch in die gleiche Fahrtrichtung zeigen, wird es zu keiner gegenseitigen Störung kommen. Das Verfahren bietet den großen Vorteil, daß eine Messung nicht von einem anderen Sender unterbrochen werden kann, solange unterschiedliche Sendefrequenzen angewendet werden.

Dies ist aber wegen der begrenzten Anzahl von Sendefrequenzen nicht immer der Fall. Kommt es also zu einer gegenseitigen Störung, so ist es notwendig, dies auch erkennen zu können. Dazu wird auf die Sendesignale, die unterschiedliche Trägerfrequenzen besitzen, eine zusätzliche Kennung moduliert. Damit nicht an jedes Fahrzeug eine eigene Kennung vergeben werden muß, sollte sie während des Betriebes zufällig verändert werden. Senden nun zwei Systeme auf der gleichen Frequenz und es kommt zu einer gegenseitigen Störung, so wird dies erkannt und die Systeme ändem ihre Sendefrequenz. Die neue Sendefrequenz sollte zufällig gewählt werden, um zu verhindern, daß beide Systeme wieder mit der gleichen Sendefrequenz arbeiten.

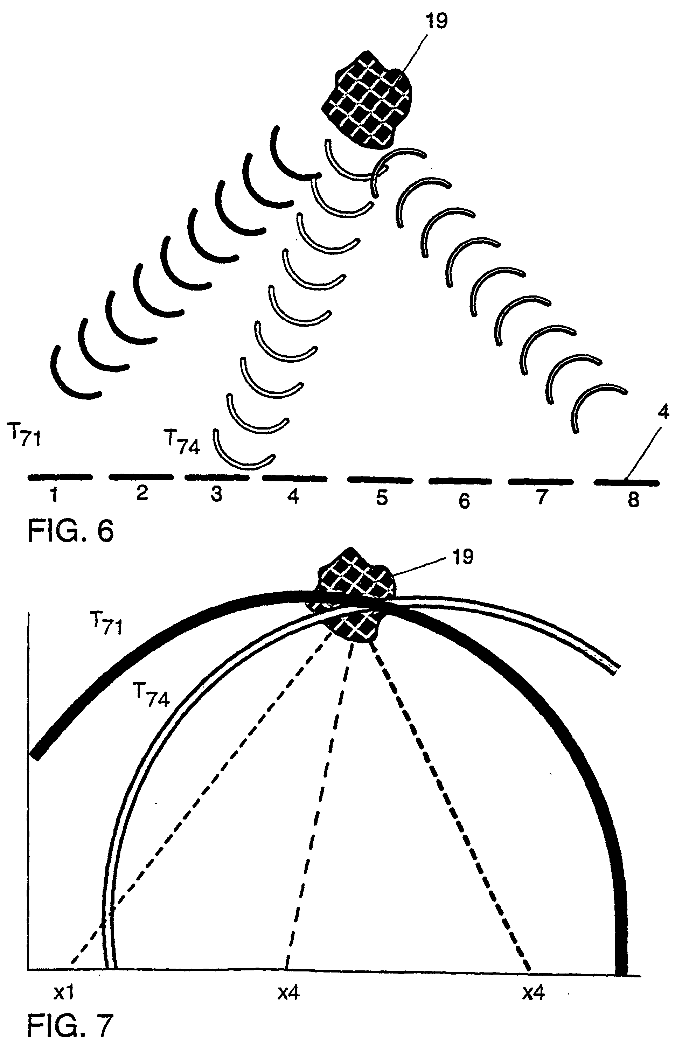

Die Ermittlung des Abstandes und der Position eines Objektes 19 soll nun anschaulich mittels der Fig. 6 und 7 erläutert werden. Dazu sei angenommen, daß acht Ultraschall-Wandler 4 Ultraschallwellen aussenden und empfangen können, dann existrieren 64 mögliche Laufstrecken. In der Fig. 6 ist der siebente Ultaschall-Wandler 4 im Sendemodus und zwei von acht möglichen Laufstrecken zu dem ersten und vierten Ultraschall-Wandler 4 dargestellt. Aus der Überlagerung der bis zu 64 Ellipsengleichungen ergibt sich der wahrscheinlichste Ort des Objektes 19, was in Fig. 7 für die beiden Laufstrecken aus Fig. 6 dargestellt ist.

## Patentansprüche

1. Vorrichtung zur Erfassung von Objekten, insbesondere als Einparkhilfe-Assistenz-Vorrichtung in einem Kraftfahrzeug, umfassend eine Anzahl von Abstands-Sensoren, mindestens einen die Abstands-Sensoren ansteuernden Mikrocontroller und eine Ausgabeeinheit,
**dadurch gekennzeichnet, daß**
die Abstands-Sensoren mit einer zeitlich veränderlichen Kennung durch den Mikrocontroller (2) beaufschlagbar sind.

2. Vorrichtung nach Anspruch 1, **dadurch gekennzeichnet, daß** die zeitliche Änderung der Kennung mittels einer Zufallsfunktion bzw. eines Zufallsgenerators generierbar ist.

3. Vorrichtung nach Anspruch 1 oder 2, **dadurch gekennzeichnet, daß** die Abstands-Sensoren einzeln oder gruppenweise mit unterschiedlichen Kennungen ansteuerbar sind.

4. Vorrichtung nach einem der vorangegangenen Ansprüche, **dadurch gekennzeichnet, daß** die Abstands-Sensoren als Ultraschall-Wandler (4), insbesondere als Folien-Ultraschall-Wandler, ausgebildet sind.

5. Vorrichtung nach Anspruch 4, **dadurch gekennzeichnet, daß** die Folien-Ultraschall-Wandler als Folien-Sandwich-Ultraschall-Wandler ausgebildet sind.

6. Verfahren zur Erfassung von Objekten, mittels einer Vorrichtung (1) nach einem der vorangegangenen Ansprüche, umfassend folgende Verfahrensschritte:
a) Aussenden eines Sendesignals mit einer zeitlich veränderlichen Kennung, wobei die Änderung der Kennung fahrzeugspezifisch und/oder sensorspezifisch vorgegeben oder mittels einer Zufallsfunktion generiert wird,
b) Empfangen eines Empfangssignals,
c) Auswerten des Empfangssignals, ob nur die ausgesendete Kennung empfangen wird,
d) Ermitteln eines Abstandes eines erfaßten Objektes (19) aus der gemessenen Laufzeit des Empfangssignals, falls ausschließlich die ausgesendete Kennung erfaßt wird, andernfalls
e) Unterbrechen des Sendevorganges für einen Zeitraum und Wiederholen der Verfahrensschritte a) - d).

7. Verfahren nach Anspruch 6, **dadurch gekennzeichnet, daß** der Zeitraum der Sendeunterbrechung mittels einer Zufallsfunktion bestimmt wird.

8. Verfahren nach Anspruch 6 oder 7, **dadurch gekennzeichnet, daß** die Kennung als Modulation einer Trägerfrequenz realisiert wird.

9. Verfahren nach einem der Ansprüche 6 bis 8, **dadurch gekennzeichnet, daß** die Abstands-Sensoren einzeln oder gruppenweise auf verschiedenen Trägerfrequenzen senden.

## Claims

1. Device for detecting objects, especially as a parking aid in a motor vehicle, comprising a number of distance sensors, at least one microcontroller which controls the distance sensors and an output unit, **characterized in that** the microcontroller (2) can apply to the distance sensors an identifier which varies over time.

2. Device according to Claim 1, **characterized in that** the change in the identifier over time can be generated by means of a random function or a random generator.

3. Device according to Claim 1 or 2, **characterized in that** the distance sensors can be driven with different identifiers on an individual or group basis.

4. Device according to one of the preceding claims, **characterized in that** the distance sensors are embodied as ultrasonic transducers (4), in particular as film ultrasonic transducers.

5. Device according to Claim 4, **characterized in that** the film ultrasonic transducers are embodied as film-sandwich ultrasonic transducers.

6. Method for sensing objects, by means of a device (1) according to one of the preceding claims, comprising the following method steps:
a) transmission of a transmit signal with an identifier which varies over time, the change in the identifier being predefined on a vehicle-specific and/or sensor-specific basis or being generated by means of a random function,
b) reception of a received signal,
c) evaluation of the received signal to determine whether only the emitted identifier is received,
d) determination of a distance from a detected object (19) from the measured delay of the received signal if only the emitted identifier is sensed, otherwise
e) interruption of the transmit process for a time period and repetition of the method steps a) - d).

7. Method according to Claim 6, **characterized in that** the time period of the interruption in the transmission is determined by means of a random function.

8. Method according to Claim 6 or 7, **characterized in that** the identifier is implemented as a modulation of a carrier frequency.

9. Method according to one of Claims 6 to 8, **characterized in that** the distance sensors transmit on different carrier frequencies on an individual or group basis.

## Revendications

1. Dispositif de détection d'objets, en particulier dispositif d'assistance au parcage à bord d'un véhicule, comprenant une pluralité de capteurs d'espacement, au moins un microcontrôleur qui commande les capteurs d'espacement et: un module de sortie, **caractérisé en ce que** les capteurs d'espacement peuvent recevoir de la part du microcontrôleur (2) un identificateur qui varie dans le temps.

2. Dispositif selon la revendication 1, **caractérisé en ce que** la variation dans le temps de l'identificateur peut être générée par une fonction aléatoire ou un générateur aléatoire.

3. Dispositif selon la revendication 1 ou 2, **caractérisé en ce que** les capteurs d'espacement peuvent être commandés individuellement ou par groupes avec des identificateurs différents.

4. Dispositif selon l'une des revendications précédentes, **caractérisé en ce que** les capteurs d'espacement sont réalisés sous la forme de transducteurs à ultrasons (4), plus particulièrement sous la forme de transducteurs à ultrasons à membrane.

5. Dispositif selon la revendication 4, **caractérisé en ce que** les transducteurs à ultrasons à membrane sont réalisés sous la forme de transducteurs à ultrasons en sandwich à membrane.

6. Procédé de détection d'objets au moyen d'un dispositif (1) selon l'une des revendications précédentes, comprenant les étapes suivantes :
a) Émission d'un signal émis avec un identifiant variant dans le temps, la variation de l'identifiant étant prédéfinie spécifiquement en fonction véhicule et/ou spécifiquement en fonction du capteur ou généré à l'aide d'une fonction aléatoire,
b) Réception d'un signal reçu,
c) Analyse du signal reçu pour vérifier si seul l'identifiant envoyé a été reçu,
d) Détermination d'une distance d'un objet détecté (19) à partir du temps de propagation mesuré du signal reçu si seul l'ident:ifiant émis a été détecté, le cas contraire
e) Interruption du processus d'émission pendant une période donnée et répétition des étapes a) - d).

7. Procédé selon la revendication 6, **caractérisé en ce que** la période d'interruption de l'émission est déterminée à l'aide d'une fonction aléatoire.

8. Procédé selon la revendication 6 ou 7, **caractérisé en ce que** l'identifiant est réalisé sous la forme d'une modulation d'une fréquence porteuse.

9. Procédé selon l'une des revendications 6 à 8, **caractérisé en ce que** les capteurs d'espacement émettent individuellement ou par groupes sur différentes fréquences porteuses.
